# FASCICULE DE BREVET EUROPEEN

(11) **EP 3 436 260 B1**
(45) Date de publication et mention de la délivrance du brevet: **10.03.2021**
(21) Numéro de dépôt: 17716969.5
(22) Date de dépôt: 23.03.2017
(51) Int. Cl.: B32B 17/10, B60J 1/00, B60J 10/70, B60Q 3/208, B60Q 3/64

(54) **VITRAGE FEUILLETE COMPRENANT UNE DIODE ELECTROLUMINESCENTE**
VERBUNDGLASSCHEIBE MIT LEUCHTDIODE
LAMINATED GLAZING PANEL COMPRISING A LIGHT-EMITTING DIODE

(30) Priorité: 31.03.2016 FR 1652804
(43) Date de publication de la demande: 06.02.2019
(73) Titulaire: SAINT-GOBAIN GLASS FRANCE, 92400 Courbevoie (FR)
(72) Inventeur: BAUERLE, Pascal, 80700 Roye (FR); HENNION, Alexandre, 60280 Venette (FR); COUTELLIER, Nicolas, 60150 Thourotte (FR); KLEO, Christophe, 60350 Attichy (FR)
(74) Mandataire: Saint-Gobain Recherche
(86) Numéro de dépôt international: PCT/FR2017/050678
(87) Numéro de publication internationale: WO 2017/168077

(56) Documents cités:
- WO-A1-2013/121134
- FR-A1- 2 978 379
- US-A1- 2011 267 833
- US-A1- 2012 104 790
- US-A1- 2012 320 621
- US-A1- 2014 362 597

## Description

La présente invention concerne un vitrage, et notamment un vitrage de véhicule, comprenant un élément vitré feuilleté comprenant une feuille de verre extérieure, une feuille de verre intérieure et une feuille intercalaire de matière plastique située entre lesdites deux feuilles de verre.

Comme pour tout élément vitré feuilleté :
- la feuille de verre extérieure présente une face extérieure, un chant et une face intercalaire qui est orientée vers la feuille intercalaire de matière plastique,
- la feuille de verre intérieure présente une face intercalaire qui est orientée vers la feuille intercalaire de matière plastique, un chant et une face intérieure.

Le vitrage selon l'invention comporte au moins une diode électroluminescente située sous un bord périphérique de ladite face intercalaire de ladite feuille de verre extérieure et comportant une face émettrice située en vis-à-vis d'une partie au moins dudit chant de ladite feuille de verre intérieure.

Une telle diode électroluminescente permet de réaliser un système d'éclairage intégré au vitrage ; ainsi le positionnement du vitrage dans la baie qu'il doit fermer réalise en temps masqué le positionnement du système d'éclairage et il n'est plus nécessaire de prévoir une étape d'installation d'un système d'éclairage en parallèle à l'étape de positionnement du vitrage dans la baie.

Ceci est particulièrement avantageux pour les vitrages de véhicule car cela permet de ne pas prévoir d'étape d'installation d'un système d'éclairage dans le véhicule sur la chaîne générale d'assemblage des véhicules.

Un vitrage comportant une diode électroluminescente située sous un bord périphérique de la face intercalaire de la feuille de verre extérieure est connu notamment de la figure 15 de la demande internationale de brevet N° WO 2010/049638 ou encore de la figure 5 de la demande internationale de brevet N° WO 2013/121134.

Dans ces vitrages, la diode électroluminescente comporte une face émettrice située à proximité du chant de la feuille de verre intérieure avec interposition d'un l'adhésif interne d'étanchéité transparent ou d'une colle entre la face émettrice et le chant de la feuille de verre intérieure ; la face émettrice n'est donc pas en vis-à-vis, c'est-à-dire en face, du chant de la feuille de verre intérieure puisqu'elle est en vis-à-vis de l'adhésif interne d'étanchéité transparent (ou de la colle) qui est lui-même (elle-même) en vis-à-vis du chant de la feuille de verre intérieure.

Ces vitrages constituent une solution satisfaite pour le positionnement de la diode électroluminescente mais est susceptible d'amélioration dans la mesure où l'adhésif interne d'étanchéité transparent (ou la colle) qui permet ce positionnement et qui est situé(e) entre la diode électroluminescente et le chant de la feuille de verre intérieure peut perdre ses capacités à maintenir ce positionnement dans le temps, notamment sous l'effet des cycles climatiques.

Pour cet adhésif interne d'étanchéité (cette colle), il est possible d'utiliser une matière plus résistante au vieillissement mais elle est alors plus onéreuse et moins transparente.

La présente invention a pour but de remédier aux inconvénients de l'art antérieur en proposant un vitrage comportant au moins une diode électroluminescente qui est protégée par une enveloppe sans que cette enveloppe puisse avoir un effet défavorable sur la diode électroluminescente et sur le système d'éclairage ainsi constitué, ou en tout cas en diminuant les effets défavorables sur la diode électroluminescente et sur le système d'éclairage ainsi constitué.

En outre, la présente invention a pour but de remédier aux inconvénients de l'art antérieur en proposant un vitrage comportant au moins une diode électroluminescente qui présente une résistance au vieillissement élevée et qui est peu onéreux à fabriquer.

La présente invention se rapporte ainsi à un vitrage selon la revendication 1. Les revendications dépendantes présentes des caractéristiques avantageuses supplémentaires.

Ce vitrage peut notamment être un vitrage de véhicule et il comprend un élément vitré feuilleté comprenant une feuille de verre extérieure, une feuille de verre intérieure et une feuille intercalaire de matière plastique située entre lesdites deux feuilles de verre, (directement au contact ou avec interposition d'une autre feuille de matière plastique),
- ladite feuille de verre extérieure présentant une face extérieure, un chant et une face intercalaire qui est orientée vers ladite feuille intercalaire de matière plastique,
- ladite feuille de verre intérieure présentant une face intercalaire qui est orientée vers ladite feuille intercalaire de matière plastique, un chant et une face intérieure.

Ce vitrage comporte en outre au moins une diode électroluminescente située sous un bord périphérique de ladite face intercalaire de ladite feuille de verre extérieure et comportant une face émettrice.

Ce vitrage est remarquable en ce que ladite face émettrice est située en vis-à-vis d'une partie au moins dudit chant de ladite feuille de verre intérieure et en ce qu'il comporte un cordon profilé comportant :
- une lèvre extérieure en contact avec ledit bord périphérique de ladite face intercalaire de ladite feuille de verre extérieure et/ou ledit chant de ladite feuille de verre extérieure,
- une lèvre intérieure en contact avec un bord périphérique de ladite face intérieure de ladite feuille de verre intérieure, et
- un corps situé entre ladite lèvre extérieure et ladite lèvre intérieure,
avec ledit corps situé à distance de ladite face émettrice de la diode électroluminescente et cela sans contact avec cette face émettrice, et de préférence en outre est situé à distance dudit chant de ladite feuille de verre intérieure et cela sans contact.

La face émettrice de ladite diode électroluminescente est donc adjacente au chant de ladite feuille de verre intérieure (c'est-à-dire à proximité de ce chant) en étant très exactement en vis-à-vis de ce chant, c'est-à-dire directement en face, sans interposition de matière solide entre la face émettrice de ladite diode électroluminescente et le chant de ladite feuille de verre intérieure.

Ainsi, la diode électroluminescente est protégée par le cordon profilé mais il n'y a pas de matière organique de cordon profilé à l'interface entre la face émettrice de la diode électroluminescente et le chant adjacent de la feuille de verre intérieure par lequel la lumière émise par la diode électroluminescente pénètre dans ce verre intérieur : la diode électroluminescente émet directement la lumière vers le chant de la feuille de verre intérieure, sans interposition de matière solide, et donc sans déperdition de lumière, entre la face émettrice et le chant en vis-à-vis ; ledit cordon profilé réalise alors une enveloppe de protection pour la face émettrice de la diode électroluminescente mais les inconvénients engendrés dans l'art antérieur, et notamment pour les vitrages des demandes de brevet N° WO 2010/049638 et WO 2013/121134 présentées ci-avant, par le vieillissement de la matière organique de l'adhésif interne d'étanchéité transparent ou de la colle à l'interface qui est situé (e) entre la face émettrice de la diode électroluminescente et le chant adjacent de la feuille de verre intérieure sont ainsi évités.

En outre, ledit corps peut être situé à distance de ladite diode électroluminescente et cela sans aucun contact avec cette diode électroluminescente ; ainsi, un espace sans matière solide est de préférence créé entre ladite diode électroluminescente et ledit cordon profilé qui réalise alors une enveloppe de protection pour ladite diode électroluminescente qui est à distance de cette diode électroluminescente sans risquer de provoquer un effet défavorable sur la diode électroluminescente et sur le système d'éclairage ainsi constitué.

L'enveloppe de protection réalisée par le cordon profilé se trouve :
- en contact avec ledit bord périphérique de ladite face intercalaire de ladite feuille de verre extérieure et/ou ledit chant de ladite feuille de verre extérieure grâce à la lèvre extérieure, et
- en contact avec un bord périphérique de ladite face intérieure de ladite feuille de verre intérieure grâce à la lèvre intérieure.

D'une manière complètement surprenante, il a ainsi été découvert qu'un tel espace sans matière solide pouvait alors favoriser l'isolation de l'enveloppe de protection vis-à-vis de la chaleur dégagée par la diode électroluminescente.

Ainsi, le vitrage selon l'invention ne comporte pas la présence d'un adhésif interne d'étanchéité transparent entre la diode électroluminescente et le chant de la feuille de verre intérieure.

La matière dudit cordon profilé est de préférence choisie opaque et est ainsi moins susceptible de modification au vieillissement.

De préférence, ladite lèvre intérieure ne s'étend pas contre ledit chant de ladite feuille de verre intérieure afin de ne pas gêner l'émission de lumière par ce chant. En effet, il a été découvert que le cordon profilé pouvait remplir sa fonction de protection sans qu'il soit nécessaire que ladite lèvre intérieure s'étende contre ledit chant de ladite feuille de verre intérieure.

Dans une variante, ladite lèvre intérieure est en contact avec ledit bord périphérique de ladite face intérieure de ladite feuille de verre intérieure sur une partie seulement de sa longueur.

Ladite lèvre extérieure présente, de préférence, une largeur comprise entre 1,0 et 3,0 mm et une hauteur comprise entre 1,0 et 5,0 mm.

Ladite lèvre intérieure présente, de préférence, une largeur comprise entre 1,0 et 10,0 mm et une hauteur comprise entre 1,0 et 3,0 mm.

Ladite diode électroluminescente est, de préférence, fixée audit bord périphérique de ladite face intercalaire de ladite feuille de verre extérieure par l'intermédiaire d'une couche adhésive, ledit corps étant situé à distance de ladite couche adhésive, sans contact et ladite lèvre extérieure étant en outre de préférence située à distance de ladite couche adhésive, sans contact. Cette couche adhésive n'est alors présente que sur cette face intercalaire de ladite feuille de verre extérieure car il ne faut pas qu'elle soit présente entre la face émettrice de la diode électroluminescente et le chant de la feuille de verre intérieure.

D'une manière complètement surprenante, il a en outre été découvert qu'un tel espace sans matière solide pouvait alors constituer une enveloppe de protection primaire et permettait de prévoir un profilé de protection supplémentaire qui est situé plus à l'intérieur que ledit cordon profilé.

Le vitrage selon l'invention peut ainsi comporter en outre un profilé de protection supplémentaire qui recouvre au moins en partie, et de préférence complètement, une face intérieure dudit cordon profilé qui est la face la plus éloignée de ladite diode électroluminescente.

La présente invention se rapporte par ailleurs à un procédé de fabrication du vitrage selon l'invention, dans lequel ledit cordon profilé est positionné par extrusion d'une matière constitutive dudit cordon profilé, avec ledit corps situé à distance de ladite diode électroluminescente et cela sans contact, et de préférence en outre est situé à distance dudit chant de ladite feuille de verre intérieure et cela sans contact. La réalisation du cordon profilé par extrusion est particulièrement avantageuse car elle permet de réaliser l'absence de contact d'une manière simple, fiable et peu onéreuse. La réalisation du cordon profilé par encapsulation par exemple est plus complexe à mettre en œuvre en raison de l'absence de contact.

De préférence, en outre, un profilé de protection supplémentaire est fabriqué par encapsulation dudit cordon profilé, c'est-à-dire par moulage du profilé de protection supplémentaire sur le cordon profilé (sur la face intérieure de ce cordon profilé). La réalisation du profilé de protection supplémentaire par encapsulation est particulièrement avantageuse car elle permet de réaliser une protection fiable dans le temps. La réalisation du profilé de protection supplémentaire par extrusion par exemple est, certes plus simple, mais moins fiable.

Avantageusement, la présente invention permet de proposer un vitrage à une (ou plusieurs) diode(s) électroluminescente (s) pour lequel cette (ou ces) diode (s) est (sont) protégée(s) par un cordon profilé qui n'est pas en contact avec elle(s).

En outre, la présente invention permet de proposer un tel vitrage pour lequel ce cordon profilé est protégé par un profilé de protection supplémentaire.

La présente invention permet ainsi de réaliser un système d'éclairage fiable et peu onéreux.

On décrira ci-après, à titre d'exemple non limitatif, plusieurs formes d'exécution de la présente invention, en référence aux dessins annexés sur lesquels :
- la figure 1 est une vue en coupe d'un premier mode de réalisation d'un vitrage selon l'invention ; et
- la figure 2 est une vue en coupe d'un second mode de réalisation d'un vitrage selon l'invention.

A l'intérieur de chaque figure, les proportions entre les différents éléments sont respectées et les éléments en arrière plan ne sont en général pas représentés, afin de faciliter leur lecture. Les mêmes références désignent les mêmes éléments d'une figure à l'autre.

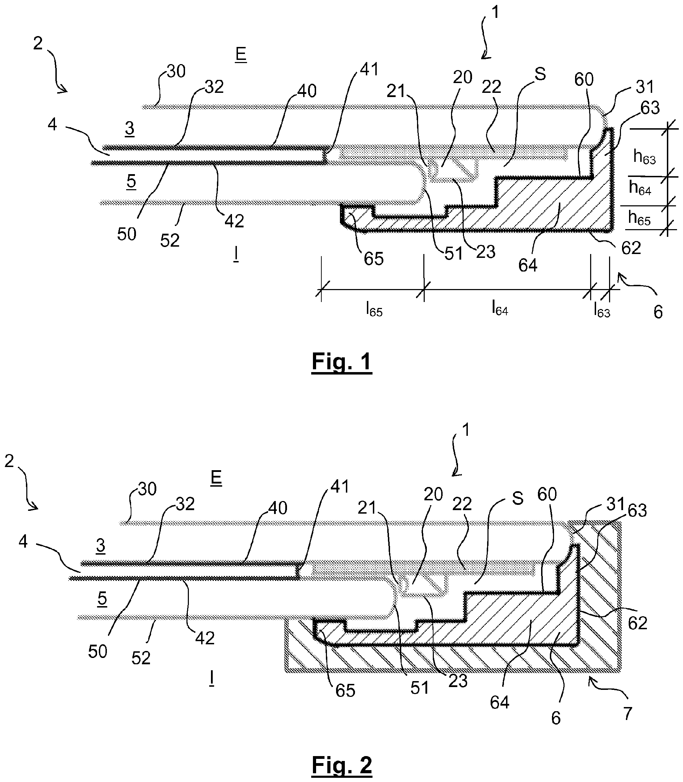

La présente invention se rapporte à un vitrage 1, tel que visible en partie en figure 1 et en figure 2, comprenant un élément vitré 2 feuilleté comprenant une feuille de verre extérieure 3, une feuille de verre intérieure 5 et une feuille intercalaire de matière plastique 4 située entre lesdites deux feuilles de verre.

La présente invention est décrite à titre d'exemple dans le cadre d'une application comme vitrage de véhicule, ce vitrage réalisant une séparation entre un espace extérieur E qui est extérieur au véhicule et un espace intérieur I qui est intérieur au véhicule. Les notions de « extérieur » et « intérieur » sont donc considérée par rapport respectivement à cet espace extérieur E et cet espace intérieur I.

La présente invention est décrite en particulier en étant appliquée à un vitrage de toit de véhicule et plus précisément dans le cadre d'une application à un bord droit d'un vitrage de toit de véhicule, comme visible en figures 1 et 2 ; les figures 1 et 2 étant chacune une vue en coupe verticale partielle du vitrage 1 avant installation dans une baie de carrosserie.

L'élément vitré 2 du vitrage 1 est nécessairement un vitrage feuilleté qui comporte, de l'extérieur vers l'intérieur, au moins : la feuille de verre extérieure 3, la feuille intercalaire de matière plastique 4 et la feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

La feuille de verre extérieure 3 présente une face extérieure 30 qui est orientée vers l'extérieur E, une face intercalaire 32 qui est orientée vers la feuille intercalaire de matière plastique 4, et un chant 31 situé entre ces deux faces.

La feuille de verre intérieure 5 présente une face intercalaire 50 qui est orientée vers la feuille intercalaire de matière plastique 4, une face intérieure 52 qui est orientée vers l'intérieur I et un chant 51 situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 qui est situé entre ces deux faces intercalaires 32, 42.

Dans les figures, les feuilles de verre sont illustrées chacune avec un chant 31, 51 arrondi ; toutefois, ces chants peuvent être droits (verticaux), avec les arêtes entre les chants et les faces qui sont alors à angle droit.

L'élément vitré 2 présente ainsi une face extérieure réalisée par la face extérieure 30 de la feuille de verre extérieure 3, une face intérieure réalisée par la face intérieure 52 de la feuille de verre intérieure 5 et un chant situé entre ces deux faces, correspondant au chant 31 de la feuille de verre extérieure 3, au chant 41 de la feuille de matière plastique 4 et au chant 51 de la feuille de verre intérieure 5, les chants des deux feuilles de verre étant ici décalés horizontalement l'un de l'autre dans la zone considérée, tout en étant séparés verticalement par un espace correspondant à l'épaisseur de la feuille de matière plastique 4.

Le pourtour de la feuille de verre intérieure 5 présente ainsi à l'endroit vu en coupe une encoche.

Le vitrage 1 est destiné à être collé sur une feuillure de la carrosserie à l'aide d'un cordon de colle non illustré, qui est situé entre la face intérieure 52 de la feuille de verre intérieure et une partie adjacente de la feuillure.

Le vitrage 1 comporte, outre l'élément vitré 2, au moins une diode électroluminescente 20 qui est située dans une zone du vitrage particulière : dans une zone de l'élément vitré où le chant 51 de la feuille de verre intérieure est décalé plus vers le centre de l'élément vitré que le chant 31 de la feuille de verre extérieur, c'est-à-dire dans la zone de l'encoche.

En outre, dans cette zone, il est possible que le chant 41 de la feuille intercalaire soit dans la continuité du chant 51 de la feuille de verre intérieur, voire que le chant 41 de la feuille intercalaire soit décalé vers le centre de l'élément vitré par rapport au chant 51 de la feuille de verre intérieure 5.

La diode électroluminescente 20 est située sous un bord périphérique de la face intercalaire 32 de la feuille de verre extérieure 3 et comporte une face émettrice 21 située en vis-à-vis d'une partie au moins du chant 51 de la feuille de verre intérieure 5 afin d'émettre de la lumière dans cette feuille de verre intérieure 5 par son chant 51.

Selon l'invention, le vitrage 1 comporte un cordon profilé 6 comportant :
- une lèvre extérieure 63 en contact avec le bord périphérique de la face intercalaire 32 de la feuille de verre extérieure 3 et/ou le chant 31 de la feuille de verre extérieure 3,
- une lèvre intérieure 65 en contact avec un bord périphérique de la face intérieure 52 de la feuille de verre intérieure 5, et
- un corps 64 situé entre la lèvre extérieure 63 et la lèvre intérieure 65,
avec le corps 64 situé à distance de la face émettrice 21 de la diode électroluminescente 20 et cela sans contact avec cette face émettrice 21 ; le corps 64 situé à distance de la totalité de la diode électroluminescente 20 et cela sans contact avec cette diode électroluminescente 20, afin de ménager un espace S, sans matière solide.

Le cordon profilé 6 comporte ainsi une face extérieure 60 qui est orientée en vis-à-vis des faces intérieures 22 et 52 des feuilles de verre et une face intérieure 62 qui est située à l'opposé de la face extérieure. La face extérieure 60 est orientée vers l'extérieur E ; la face intérieure 62 est orientée vers l'intérieur I.

Sur les figures 1 et 2, la lèvre extérieure 63 est en contact à la fois avec le bord périphérique de la face intercalaire 32 de ladite feuille de verre extérieure 3 et le chant 31 de la feuille de verre extérieure 3 afin de permettre d'obtenir une étanchéité la plus efficace possible vis-à-vis des fluides, pour protéger la diode électroluminescente 20.

Sur les figures 1 et 2, en outre, le corps 64 est situé à distance du chant 51 de la feuille de verre intérieure 5 et cela sans contact, afin de ménager un espace S suffisamment important pour réaliser une isolation du corps 64 vis-à-vis de la chaleur émise par la diode électroluminescente 20.

Chacun peut constater sur les figures l'absence de contact entre la diode électroluminescente 20 et la totalité de la face extérieure 60 qui est située en vis-à-vis.

Le corps 64 présente ainsi une largeur l₆₄ qui est égale au décalage du chant 51 de la feuille de verre intérieure, vers le centre de l'élément vitré, par rapport au chant 31 de la feuille de verre extérieure dans la zone où la diode électroluminescente est présente. Cette largeur l₆₄ est de préférence comprise entre 5,0 et 50,0 mm et est, par exemple de 10,0 mm.

La lèvre extérieure 63 présente une largeur l₆₃, en contact avec la feuille de verre extérieure 3, qui est de préférence comprise entre 1,0 et 5,0 mm et est, par exemple de 3,0 mm.

La lèvre intérieure 65 présente une largeur l₆₅ qui s'étend à partir du chant 51 de la feuille de verre intérieure en direction du centre de l'élément vitré, qui est de préférence comprise entre 1,0 et 50,0 mm et est, par exemple de 5,0 mm.

Le corps 64 présente une hauteur h₆₄ qui est égale à la hauteur entre la face intérieure 23 de la diode électroluminescente et la face intérieure 52 de la feuille de verre intérieure. Cette hauteur h₆₄ est inférieure à l'épaisseur de la feuille de verre intérieure 5 ; soit par exemple lorsque l'épaisseur de la feuille de verre intérieure est de 2,0 mm, la hauteur h₆₄ est inférieure à 2,0 mm. Elle peut être par exemple de l'ordre de la moitié de l'épaisseur de la feuille de verre intérieure.

La lèvre extérieure 63 présente une hauteur h₆₃, qui est considérée à partir de la face intérieure 23 de la diode électroluminescente et en direction de l'extérieur ; cette hauteur est :
- au minimum égale à l'épaisseur de la diode électroluminescente 20 lorsque la lèvre extérieur 63 est en contact avec le bord périphérique de la face intercalaire 32 de la feuille de verre extérieure 3 ; Cette hauteur est égale à l'épaisseur de la diode électroluminescente 20 lorsque la lèvre extérieur 63 est en contact uniquement avec le bord périphérique de la face intercalaire 32 de la feuille de verre extérieure 3 sans être en contact le chant 31 de la feuille de verre extérieure 3 ; et
- au minimum égale en plus à la moitié de l'épaisseur de la feuille de verre extérieure 3 lorsque la lèvre extérieur 63 est en contact avec le chant 31 de cette feuille de verre extérieure 3 ; soit par exemple lorsque l'épaisseur de la feuille de verre extérieure est de 2,0 mm, une hauteur h₆₃ minimum de 1,0 mm en plus de l'épaisseur mentionnée au premier point.

La lèvre intérieure 65 présente une hauteur h₆₅ qui s'étend à partir de la face intérieure 52 de la feuille de verre intérieure en direction de l'intérieur, qui est de préférence comprise entre 1,0 et 5,0 mm et est, par exemple de 3,0 mm.

La diode électroluminescente 20 est située dans la zone où le chant 51 de la feuille de verre intérieure est plus vers le centre de l'élément vitré que le chant 31 de la feuille de verre extérieure. Elle se trouve ainsi plus vers le centre de l'élément vitré que l'aile extérieure 63. Elle est fixée au bord périphérique de ladite face intercalaire 32 de la feuille de verre extérieure 3 par l'intermédiaire d'une couche adhésive 22.

Cette couche adhésive 22 présente une épaisseur inférieure à celle de la feuille intercalaire 4. Comme le chant 41 de la feuille intercalaire est décalé vers le centre de l'élément vitré par rapport au chant 51 de la feuille de verre intérieure 5, cette couche adhésive 22 peut s'étendre entre les deux feuilles de verre 3, 5, à proximité de la feuille intercalaire, là où il n'y a pas de feuille intercalaire.

Le corps 64 est, de préférence, situé à distance de cette couche adhésive 22, sans contact avec cette couche adhésive.

La lèvre extérieure 63 est en outre de préférence située à distance de cette couche adhésive 22, sans contact avec elle.

La lèvre intérieure 65 ne s'étend, de préférence, pas contre le chant 51 de ladite feuille de verre intérieure 5 afin qu'un maximum de lumière émise par la diode électroluminescente 20 pénètre dans la feuille de verre intérieure par ce chant 51.

Il est possible que la lèvre intérieure 65 soit en contact avec le bord périphérique de la face intérieure 52 de ladite feuille de verre intérieure 5 sur une partie seulement de la longueur de la lèvre intérieure 65.

Ainsi, il est possible de réaliser un retrait selon l'épaisseur de la lèvre intérieure 65 tel que la lèvre intérieure ne soit pas en contact avec l'arête située entre le chant 51 et la face intérieure 52.

Pour fabriquer le cordon profilé 6, il est proposé qu'il soit positionné par extrusion d'une matière constitutive du cordon profilé directement sur l'élément vitré, après la réalisation de ce dernier (après le feuilletage).

Il est alors possible de réaliser le cordon profilé 6 tel que le corps 64 soit situé à distance de la diode électroluminescente 20 et cela sans contact.

En outre, il est possible que le cordon profilé 6 soit à distance du chant 51 de la feuille de verre intérieure 5 et cela sans contact.

Il est possible par ailleurs que le cordon profilé 6 soit à distance de la face intérieure 32 de la feuille de verre extérieure 3 et cela sans contact.

Le matériau polymère constitutif du cordon profilé 6 peut être un thermoplastique (PVC, TPE, ...), un polyuréthane ou encore un caoutchouc synthétique du type EPDM ou toute autre matière adéquate.

La figure 2 illustre une variante de réalisation selon laquelle le cordon profilé 6 comporte en outre un profilé de protection supplémentaire 7 qui est situé plus à l'intérieur que ledit cordon profilé 6.

La face intérieure 62 du cordon profilé 6 est ainsi recouverte au moins en partie, et même ici complètement, par le profilé de protection supplémentaire 7.

Ce profilé de protection supplémentaire 7 est, de préférence, fabriqué non pas par extrusion mais par encapsulation du cordon profilé 6.

Pour cela, le procédé de fabrication du vitrage 1 comporte une étape de moulage du profilé de protection supplémentaire 7 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive du profilé de protection supplémentaire pendant l'étape de moulage de ce profilé de protection supplémentaire.

Le profilé de protection supplémentaire 7, recouvre de préférence complètement le cordon profilé 6. Il est ainsi en contact avec la face intérieure 52 de la feuille de verre intérieure et en contact avec le chant 31 et/ou la face extérieure 30 de la feuille de verre extérieure 3.

Sur la figure 2, le profilé de protection supplémentaire 7 est illustré dans la continuité (« flush ») de la face extérieure 30, sans dépasser au-dessus de cette face extérieure 30 et sans être en contact avec cette face extérieure.

Le matériau polymère constitutif du profilé de protection supplémentaire 7 est différent du matériau constitutif du cordon profilé ; le profilé de protection supplémentaire 7 peut être par exemple en polyuréthane ou en polychlorure de vinyle.

Il est possible qu'il existe une adhérence entre le cordon profilé 6 et le profilé de protection supplémentaire 7 en fonction des matériaux utilisés.

La présente invention est susceptible de s'appliquer à n'importe quel vitrage et en particulier à n'importe quel vitrage fixe de véhicule. Elle peut s'appliquer à n'importe quel bord de ce vitrage : gauche, droit, haut ou bas et en particulier à plusieurs de ces bords à la fois, voire à tous ces bords à la fois.

## Revendications

1. Vitrage (1) et notamment vitrage de véhicule, comprenant un élément vitré (2) feuilleté comprenant une feuille de verre extérieure (3), une feuille de verre intérieure (5) et une feuille intercalaire de matière plastique (4) située entre lesdites deux feuilles de verre,
ladite feuille de verre extérieure (3) présentant une face extérieure (30), un chant (31) et une face intercalaire (32) qui est orientée vers ladite feuille intercalaire de matière plastique (4),
ladite feuille de verre intérieure (5) présentant une face intercalaire (50) qui est orientée vers ladite feuille intercalaire de matière plastique (4), un chant (51) et une face intérieure (52),
ledit vitrage (1) comportant au moins une diode électroluminescente (20) située sous un bord périphérique de ladite face intercalaire (32) de ladite feuille de verre extérieure (3) et comportant une face émettrice (21),
**caractérisé en ce que ladite** face émettrice (21) est située en vis-à-vis d'une partie au moins dudit chant (51) de ladite feuille de verre intérieure (5) **et en ce qu'**il comporte un cordon profilé (6) comportant
- une lèvre extérieure (63) en contact avec ledit bord périphérique de ladite face intercalaire (32) de ladite feuille de verre extérieure (3) et/ou ledit chant (31) de ladite feuille de verre extérieure (3),
- une lèvre intérieure (65) en contact avec un bord périphérique de ladite face intérieure (52) de ladite feuille de verre intérieure (5), et
- un corps (64) situé entre ladite lèvre extérieure (63) et ladite lèvre intérieure (65),
avec ledit corps (64) situé à distance de ladite face émettrice (21) de la diode électroluminescente (20) et cela sans contact avec cette face émettrice (21), et de préférence en outre est situé à distance dudit chant (51) de ladite feuille de verre intérieure (5) et cela sans contact.

2. Vitrage (1) suivant la revendication 1, **caractérisé en ce que** ladite lèvre intérieure (65) ne s'étend pas contre ledit chant (51) de ladite feuille de verre intérieure (5).

3. Vitrage (1) suivant la revendication 1 ou 2, **caractérisé en ce que** ladite lèvre intérieure (65) est en contact avec ledit bord périphérique de ladite face intérieure (52) de ladite feuille de verre intérieure (5) sur une partie seulement de sa longueur.

4. Vitrage (1) suivant l'une quelconque des revendications 1 à 3, **caractérisé en ce que** ladite lèvre extérieure (63) présente une largeur (l₆₃) comprise entre 1,0 et 3,0 mm et une hauteur (h₆₃) comprise entre 1,0 et 5,0 mm.

5. Vitrage (1) suivant l'une quelconque des revendications 1 à 4, **caractérisé en ce que** ladite lèvre intérieure (65) présente une largeur (l₆₅) comprise entre 1,0 et 10,0 mm et une hauteur (h₆₅) comprise entre 1,0 et 3,0 mm.

6. Vitrage (1) suivant l'une quelconque des revendications 1 à 5, **caractérisé en ce que** ladite diode électroluminescente (20) est fixée audit bord périphérique de ladite face intercalaire (32) de ladite feuille de verre extérieure (3) par l'intermédiaire d'une couche adhésive (22), ledit corps (64) étant situé à distance de ladite couche adhésive (22), sans contact et ladite lèvre extérieure (63) étant en outre de préférence située à distance de ladite couche adhésive (22), sans contact.

7. Vitrage (1) suivant l'une quelconque des revendications 1 à 6, **caractérisé en ce qu'**il comporte en outre un profilé de protection supplémentaire (7) qui recouvre au moins en partie, et de préférence complètement, une face intérieure (62) dudit cordon profilé (6) qui est la face la plus éloignée de ladite diode électroluminescente (20).

8. Procédé de fabrication d'un vitrage (1) suivant l'une quelconque des revendications 1 à 7, dans lequel ledit cordon profilé (6) est positionné par extrusion d'une matière constitutive dudit cordon profilé, avec ledit corps (64) situé à distance de ladite face émettrice (21) de la diode électroluminescente (20) et cela sans contact avec cette face émettrice (21), et de préférence en outre est situé à distance dudit chant (51) de ladite feuille de verre intérieure (5) et cela sans contact.

9. Procédé suivant la revendication 8, **caractérisé en ce que,** en outre, un profilé de protection supplémentaire (7) est fabriqué par encapsulation dudit cordon profilé (6).

## Patentansprüche

1. Verglasung (1) und insbesondere Fahrzeugverglasung, umfassend ein Verbundglaselement (2), das eine äußere Glasscheibe (3), eine innere Glasscheibe (5) und eine zwischen den beiden Glasscheiben angeordnete Zwischenscheibe aus Kunststoffmaterial (4) umfasst,
wobei die äußere Glasscheibe (3) eine Außenseite (30), einen Rand (31) und eine Zwischenseite (32) aufweist, die der Zwischenscheibe aus Kunststoffmaterial (4) zugewandt ist,
wobei die innere Glasscheibe (5) eine Zwischenseite (50), die der Zwischenscheibe aus Kunststoffmaterial (4) zugewandt ist, einen Rand (51) und eine Innenseite (52) aufweist,
wobei die Verglasung (1) mindestens eine Leuchtdiode (20) aufweist, die unter einer Umfangskante der Zwischenseite (32) der äußeren Glasscheibe (3) angeordnet ist und eine emittierende Seite (21) aufweist,
**dadurch gekennzeichnet, dass** die emittierende Seite (21) mindestens einem Teil des Randes (51) der inneren Glasscheibe (5) gegenüberliegend angeordnet ist, **und dass** sie einen profilierten Wulst (6) aufweist, aufweisend
- eine äußere Lippe (63) in Kontakt mit der Umfangskante der Zwischenseite (32) der äußeren Glasscheibe (3) und/oder dem Rand (31) der äußeren Glasscheibe (3),
- eine innere Lippe (65) in Kontakt mit einer Umfangskante der Innenseite (52) der inneren Glasscheibe (5), und
- einen Körper (64), der zwischen der äußeren Lippe (63) und der inneren Lippe (65) angeordnet ist,
wobei der Körper (64) beabstandet von der emittierenden Seite (21) der Leuchtdiode (20) angeordnet ist und dies ohne Kontakt mit dieser emittierenden Seite (21), und vorzugsweise ferner beabstandet von dem Rand (51) der inneren Glasscheibe (5) angeordnet ist und dies ohne Kontakt.

2. Verglasung (1) nach Anspruch 1, **dadurch gekennzeichnet, dass** die innere Lippe (65) sich nicht gegen den Rand (51) der inneren Glasscheibe (5) erstreckt.

3. Verglasung (1) nach Anspruch 1 oder 2, **dadurch gekennzeichnet, dass** die innere Lippe (65) nur über einen Teil ihrer Länge in Kontakt mit der Umfangskante der Innenseite (52) der inneren Glasscheibe (5) ist.

4. Verglasung (1) nach einem der Ansprüche 1 bis 3, **dadurch gekennzeichnet, dass** die äußere Lippe (63) eine Breite (l₆₃) zwischen 1,0 und 3,0 mm und eine Höhe (h₆₃) zwischen 1,0 und 5,0 mm aufweist.

5. Verglasung (1) nach einem der Ansprüche 1 bis 4, **dadurch gekennzeichnet, dass** die innere Lippe (65) eine Breite (l₆₅) zwischen 1,0 und 10,0 mm und eine Höhe (h₆₅) zwischen 1,0 und 3,0 mm aufweist.

6. Verglasung (1) nach einem der Ansprüche 1 bis 5, **dadurch gekennzeichnet, dass** die Leuchtdiode (20) mittels einer zwischenliegenden Klebeschicht (22) an der Umfangskante der Zwischenseite (32) der äußeren Glasscheibe (3) befestigt ist, wobei der Körper (64) kontaktlos beabstandet zu der Klebeschicht (22) angeordnet ist und die äußere Lippe (63) ferner vorzugsweise kontaktlos beabstandet zu der Klebeschicht (22) angeordnet ist.

7. Verglasung (1) nach einem der Ansprüche 1 bis 6, **dadurch gekennzeichnet, dass** sie ferner ein zusätzliches Schutzprofil (7) aufweist, das mindestens teilweise und vorzugsweise vollständig eine Innenseite (62) des profilierten Wulstes (6) abdeckt, welche die von der Leuchtdiode (20) am weitesten entfernte Seite ist.

8. Verfahren zur Herstellung einer Verglasung (1) nach einem der Ansprüche 1 bis 7, wobei der profilierte Wulst (6) durch Extrusion eines Bestandsmaterials des profilierten Wulstes positioniert wird, wobei der Körper (64) beabstandet von der emittierenden Seite (21) der Leuchtdiode (20) angeordnet wird und dies ohne Kontakt mit dieser emittierenden Seite (21), und vorzugsweise ferner beabstandet von dem Rand (51) der inneren Glasscheibe (5) angeordnet wird und dies ohne Kontakt.

9. Verfahren nach Anspruch 8, **dadurch gekennzeichnet, dass** ferner ein zusätzliches Schutzprofil (7) durch Verkapselung des profilierten Wulstes (6) hergestellt wird.

## Claims

1. A glazing (1) and in particular automotive glazing, comprising a laminated glazed element (2) comprising an exterior glass sheet (3), an interior glass sheet (5) and a plastic interlayer sheet (4) that is located between said two glass sheets,
said exterior glass sheet (3) having an exterior face (30), an edge face (31) and an interlayer face (32) that is oriented toward said plastic interlayer sheet (4),
said interior glass sheet (5) having an interlayer face (50) that is oriented toward said plastic interlayer sheet (4), an edge face (51) and an interior face (52),
said glazing (1) including at least one light-emitting diode (20) located under a peripheral edge of said interlayer face (32) of said exterior glass sheet (3) and having an emitting face (21),
**characterized in that said** emitting face (21) is located facing at least a part of said edge face (51) of said interior glass sheet (5) **and in that** it includes a profiled bead (6) including
- an exterior lip (63) in contact with said peripheral edge of said interlayer face (32) of said exterior glass sheet (3) and/or said edge face (31) of said exterior glass sheet (3),
- an interior lip (65) in contact with a peripheral edge of said interior face (52) of said interior glass sheet (5), and
- a body (64) located between said exterior lip (63) and said interior lip (65),
with said body (64) being located a distance away from said emitting face (21) of the light-emitting diode (20) and not in contact with said emitting face (21), and preferably furthermore being located a distance away from, and not in contact with, said edge face (51) of said interior glass sheet (5).

2. The glazing (1) as claimed in claim 1, **characterized in that** said interior lip (65) does not lie against said edge face (51) of said interior glass sheet (5).

3. The glazing (1) as claimed in claim 1 or 2, **characterized in that** said interior lip (65) is in contact with said peripheral edge of said interior face (52) of said interior glass sheet (5) over only a part of its length.

4. The glazing (1) as claimed in any one of claims 1 to 3, **characterized in that** said exterior lip (63) has a width (l₆₃) comprised between 1.0 and 3.0 mm and a height (h₆₃) comprised between 1.0 and 5.0 mm.

5. The glazing (1) as claimed in any one of claims 1 to 4, **characterized in that** said interior lip (65) has a width (l₆₅) comprised between 1.0 and 10.0 mm and a height (h₆₅) comprised between 1.0 and 3.0 mm.

6. The glazing (1) as claimed in any one of claims 1 to 5, **characterized in that** said light-emitting diode (20) is attached to said peripheral edge of said interlayer face (32) of said exterior glass sheet (3) by means of an adhesive layer (22), said body (64) being located a distance away from, and not in contact with, said adhesive layer (22), and said exterior lip (63) furthermore preferably being located a distance away from, and not in contact with, said adhesive layer (22).

7. The glazing (1) as claimed in any one of claims 1 to 6, **characterized in that** it furthermore includes an additional protective profile (7) that at least partially, and preferably completely, covers an interior face (62) of said profiled bead (6), namely the face furthest away from said light-emitting diode (20).

8. A process for manufacturing a glazing (1) as claimed in any one of claims 1 to 7, wherein said profiled bead (6) is positioned, by extruding a constituent material of said profiled bead, with said body (64) located a distance away from said emitting face (21) of the light-emitting diode (20) and not in contact with said emitting face (21), and preferably furthermore is located a distance away from, and not in contact with, said edge face (51) of said interior glass sheet (5).

9. The process as claimed in claim 8, **characterized in that,** furthermore, an additional protective profile (7) is manufactured by encapsulating said profiled bead (6).
